# EUROPÄISCHE PATENTSCHRIFT

(11) **EP 1 567 938 B1**
(45) Veröffentlichungstag und Bekanntmachung des Hinweises auf die Patenterteilung: **04.10.2006**
(21) Anmeldenummer: 03782258.2
(22) Anmeldetag: 01.12.2003
(51) Int. Cl.: G06F 13/18

(54) **SPEICHERSYSTEM MIT MEHREREN SPEICHERCONTROLLERN AND VERFAHREN ZU DEREN SYNCHRONISIERUNG**
MEMORY SYSTEM COMPRISING A PLURALITY OF MEMORY CONTROLLERS AND METHOD FOR SYNCHRONIZING THE SAME
SYSTEME DE MEMOIRE COMPORTANT PLUSIEURS CONTROLEURS DE MEMOIRE ET PROCEDE DE SYNCHRONISATION DE CES CONTROLEURS

(30) Priorität: 04.12.2002 DE 10256502
(43) Veröffentlichungstag der Anmeldung: 31.08.2005
(73) Patentinhaber: Hyperstone AG, 78467 Konstanz (DE)
(72) Erfinder: BAUMHOF, Christoph, 78315 Radolfzell-Euttingen (DE); KÜHNE, Reinhard, 78479 Reichenau (DE)
(74) Vertreter: Hanewinkel, Lorenz
(86) Internationale Anmeldenummer: PCT/EP2003/013495
(87) Internationale Veröffentlichungsnummer: WO 2004/051490

(56) Entgegenhaltungen:
- US-A- 4 773 005
- US-A- 5 689 675
- US-A- 6 026 464
- US-B1- 6 330 645
- US-B1- 6 397 314

## Beschreibung

Die Erfindung betrifft ein Speichersystem, welches mit mehreren, an einem getakteten Bus parallel angeordneten Speichercontrollern und jeweils den Speichercontrollern zugeordneten Speicherchips gebildet ist und über den Bus mit einem Hostsystem mit Speicheroperationskommandos unter Verwendung von logischen Speichersektornummern kommuniziert.

Die Größe eines Speichersystems, angeschlossen an ein Hostsystem, ist durch die Merkmale des Speichercontrollers begrenzt. Diese Speichercontroller sind aus Preisgründen sehr einfach aufgebaut und besitzen üblicherweise folgende Merkmale:
- bis zu 100 Anschlusspins, da preiswerte Standardgehäuse verwendet werden,
- bis zu 10 Chipselect-Signale zur Auswahl von Speicherchips,
- bis zu 16 KByte interner RAM-Speicher.
Um größere Systeme mit mehr als 10 Speicherchips aufzubauen, sind zusätzliche externe Bauteile erforderlich wie Decoder, Bustransceiver und evtl. auch RAM-Speicher.
Aus der Anmeldeschrift mit dem Aktenzeichen DE102 27 256.5 ist beispielsweise eine Anordnung bekannt, bei der die Speicherchips eines größeren Speichers über zusätzliche Bauteile an einen Controller angeschlossen sind.
In der Patentschrift US 6,397,314 ist eine Anordnung von Speicherchips an einem Controller beschrieben, wobei der Controller einen doppelt breiten Datenbus besitzt, um zwei Speicherchips parallel mit Daten zu versorgen. Dies bedingt einen nicht standardmäßigen Speichercontroller, der zusätzliche Anschlusspins benötigt. Diese Anordnung ist außerdem nicht auf noch größere Anordnungen anwendbar, da sie auf zwei simultan ansprechbare Speicherchips begrenzt ist.
In dem Patent US 5,212,799 ist ein Speichersystem mit mehreren Prozessoren und Speichercontrollern beschrieben, dass durch zwischen den Prozessoren und Speichercontrollern geführte BUSY-Leitungen die Verfälschung von Daten beim Zugriff mehrere Prozessoren auf die Speichercontroller vermeidet.

Der Erfindung liegt die Aufgabe zugrunde, größere Speichersysteme als sie mit nur einem standardmäßigen Speichercontroller realisierbar sind, durch die Kombination von mehreren standardmäßigen Speichercontrollern ohne den Einsatz zusätzlicher Bauelemente zu bilden, wobei die maximale Größe nur durch die Anzahl der eingesetzten Speichercontroller begrenzt ist. Um mit der durch Standardgehäuse vorgegebenen Anzahl von Anschlusspins auszukommen, soll für die Zusammenschaltung mehrer Speichercontroller nur eine minimale Anzahl von Anschlusspins benötigt werden.

Gelöst wird die Aufgabe erfindungsgemäß dadurch, dass das Speichersystem mit mehreren, an einem getakteten Bus parallel angeordneten Speichercontrollern und jeweils den Speichercontrollern zugeordneten Speicherchips gebildet ist und dabei über den Bus mit einem Hostsystem mit Speicheroperationskommandos unter Verwendung von logischen Speichersektornummern kommuniziert, wobei bei einer vom Hostsystem angeforderten Speicheroperation der jeweils für einen Bereich von logischen Speichersektornummern betroffene Speichercontroller den Bus für die Kommunikation mit dem Hostsystem mittels einer Arbitrierung über eine Arbitrierungsleitung zwischen den Speichercontrollern übernimmt.

Vorteilhafte Ausgestaltungen der Erfindung sind in den Unteransprüchen beschrieben.

In PC-Systemen, digitalen Kameras oder in ähnlichen Geräten, hier als Hostsystem bezeichnet, wird über einen Bus auf ein Speichersystem zugegriffen und über Speicheroperationskommandos mit diesem kommuniziert. Dieser Bus kann als sogenannte PCMCIA-Schnittstelle, IDE-Schnittstelle oder dergleichen ausgeführt sein. Mit den verschiedenen Einsatzfällen der Hostsysteme ist ein skalierbarer Speicher gefordert.
Durch die Parallelschaltung von mehreren Speichercontrollern mit jeweils zugeordneten Speicherchips in einer vom Controller maximal verwaltbaren Anzahl wird mit dem Einsatz von immer gleichen Speichercontrollern eine skalierbare Speichergröße erreicht, die keine weiteren Bauteile benötigt, solange die physikalische Spezifikation des Busses eingehalten wird. Die Kommunikation der Controller mit dem Hostsystem erfolgt unter Verwendung von standardisierten Kommandos, bei denen der Speicher mit logischen Speichersektornummern adressiert ist. Durch ein Arbitrierungsverfahren sind jedem Speichercontroller exklusiv Bereiche von logischen Speichersektornummern zugeordnet. Bei Hostkommandos, welche die jeweiligen logischen Speichersektornummern betreffen, übernimmt der zugeordnete Speichercontroller die Abarbeitung des Kommandos. Das Arbitrierungsverfahren stellt sicher, dass alle logischen Speichersektornummern jeweils von einem der Controller bearbeitet werden und sich bei einem Kommando, z.B. einem Lesekommando für einen Speicherbereich von mehreren Sektornummern, die Controller entsprechend ergänzen und jeweils den Bus zum geeigneten Zeitpunkt übernehmen.

Da mehrere Speichercontroller mit dem Hostsystem kommunizieren, ist es vorteilhaft, dass einer der Speichercontroller als Master an dem Bus bestimmt ist. Dieser führt solange die Kommunikation mit dem Hostsystem durch, wie kein anderer Speichercontroller aufgrund der zugeordneten Speichersektomummer die Kommunikation auf dem Bus übernimmt. Insbesondere werden vom Master Speicheroperationen ausgeführt und beantwortet, die das Speichersystem als Ganzes betreffen. Solche Speicheroperationen sind beispielsweise: "Reset", "Initialisierung", "SetFeatures", "Diagnose". Bei einigen Speicheroperationen werden die Kommandos von allen Speichercontrollern ausgeführt, die Kommunikation über den Status wird aber nur vom Master mit dem Hostsystem geführt.

Ein wesentlicher Vorteil der erfindungsgemäßen Ausführung des Speichersystems ist die Verwendung nur einer einzigen Leitung zur Arbitrierung des Busses zwischen den Speichercontrollern. Diese Leitung ist als Tri-State-Leitung ausgeführt und besitzt die drei elektrischen Zustände "0", "1", "Tri-State". Dabei ist dann z.B. der Zustand "0" dem logischen "belegt" des Busses und der Zustand "1" dem logischen "freigegeben" zugeordnet.
Bei der Initialisierung der Controller erhalten die Controller Nummern, über die auch der zugeordnete Bereich von logischen Speichersektornummern festgelegt ist. So ist z.B. bei vier Controllern der Controller 1 den Speichersektornummern 0,4,8,12,..... zugeordnet, der Controller 2 den Speichersektornummern 1,5,9,13,...., der Controller 3 den Speichersektomummem 2,6,10,14,...., der Controller 4 den Speichersektornummern 3,7,11,15,.... Wenn nun durch ein Lesekommando die Sektoren 4-11 gelesen werden sollen, übernimmt zuerst der Controller 1 für den Speichersektor 4 den Bus, indem er die Tri-State-Leitung auf "0" zieht. Wenn der Speichersektor 4 übertragen ist, gibt der Controller1 den Bus frei, indem er die Tri-State-Leitung auf "1" schaltet oder in den "Tri-State-Zustand" geht. Danach übernimmt der Controller 2 für den Speichersektor 5 den Bus auf gleiche Art und Weise. So wird der Bus nacheinander fortlaufend von den Controllern übernommen, bis alle angeforderten Speichersektoren, in diesem Fall bis Sektor 11, übertragen sind.

Um einen sauberen Wechsel der Kontrolle über den Bus zwischen den Controllern zu erreichen, ist es vorteilhaft, eine Schutzzeit einzuhalten, in welcher die Tri-State-Leitung definiert auf "freigegeben" getrieben ist. Die Zeitkonstante der Tri-State-Leitung mit einem Pull-Up-Widerstand ist bei einem schnellen Busbetrieb nicht kurz genug. Eine günstige Schutzzeit ist eine Taktlänge auf dem Bus.

Wie oben beschrieben, ist es günstig, die Zuordnung der Speichercontroller zu logischen Speichesektornummern so vorzunehmen, dass aufeinanderfolgenden Speichersektornummern unterschiedliche Controller zugeordnet sind. Damit können so viele logische Speichersektoren quasi parallel geschrieben oder gelesen werden, wie Speichercontroller vorhanden sind. Damit wird eine hohe Arbeitsgeschwindigkeit des Speichersystems erreicht.

Eine besonders vorteilhafte Ausführung des Speichersystems ergibt sich bei dem Einsatz von Flashspeichern als Speicherchips. Bei diesem Speichertyp treten gegenüber den Zeiten des Lesens lange Schreib- und Löschzeiten auf. Durch das Überlappen ("Interleave") der Bedienung von fortlaufenden logischen Speichersektornummern durch unterschiedliche Speichercontroller und damit auch unterschiedlichen Speicherchips laufen diese Schreib- und Löschvorgänge quasi parallel ab, was die Geschwindigkeit des gesamten Speichersystems steigert. Dabei können die realen Speichersektoren, auch "Pages" genannt, die in die Flashchips geschrieben werden, eine vielfache Größe der logischen Speichersektoren besitzen.

Ein einfacher und preisgünstiger Speicheraufbau ergibt sich, wenn die Speichercontroller zusammen auf einem Halbleitersubstrat integriert sind. Bei einem solchen Aufbau entfallen die Kosten für die einzelnen Gehäuse, und die Anzahl der Anschlusspins untereinander ist nicht von Bedeutung. Insbesondere sind dann auf dem Halbleitersubstrat auch zusätzliche Kontrollregister untergebracht, mit denen beispielsweise die Reihenfolge der einzelnen Speichercontroller am Bus festgelegt wird und der Master bestimmt ist.

Falls solche Kontrollregister nicht vorhanden sind, wird während der Initialisierung des Speichersystems die Bestimmung des Masters und die Festlegung der Reihenfolge der Speichercontroller am Bus durch nachfolgendes Verfahren festgelegt:
Dem initialisierenden Hostsystem ist die Größe des Speichersystems und die Anzahl der eingesetzten Speichercontroller bekannt.
Die Tri-State-Leitung befindet sich im Zustand "freigegeben". Das Hostsystem sendet über den Bus ein Bestimmungskommando, das von allen angeschlossenen Speichercontrollern aufgenommen wird. Die Speichercontroller bestimmen anhand eines Zählers, der den angelegten Takt zählt, eine Wartezeit. Derjenige Speichercontroller, bei dem die Wartezeit als erstes abläuft, zieht die Tri-State-Leitung für einen definierten Zeitraum auf "belegt". Er besitzt damit die Speichercontrollernummer 1, und er ist auch als Master bestimmt. Die anderen Speichercontroller registrieren diesen Vorgang. Der Master sendet an das Hostsystem ein Bestätigungssignal. Daraufhin wiederholt das Hostsystem das Bestimmungskommando. Der Master zieht sich jetzt aus der Bestimmungsprozedur zurück. Alle anderen Speichercontroller warten wieder gemäß ihrer intern bestimmten Wartezeit. Derjenige Speichercontroller, der jetzt die kürzeste Wartezeit hat, belegt wieder die Tri-State-Leitung und bekommt damit die nächst Speichercontrollernummer zugeteilt. Der Master bestätigt wieder den Vorgang gegenüber dem Hostsystem. Der Speichercontroller, der jetzt eine Controllernummer erhalten hat, zieht sich auch aus dem Vergabeverfahren zurück. Das Hostsystem wiederholt den Vorgang mit dem Bestimmungskommando so oft, wie es der Anzahl der Speichercontroller entspricht. Bekommt das Hostsystem keine Bestätigung auf ein Bestimmungskommando, da eine Controllernummer aufgrund von gleich langen Wartezeiten doppelt vergeben wurde, wiederholt es das gesamte Verfahren von vorn.

Die Wartezeit beim Bestimmungsverfahren wird vorteilhafterweise aus einem Zähler im Speichercontroller mittels eines zufällig bestimmten Zählerstandes abgeleitet. Der hier hochgezählte Takt wird in jedem Speichercontroller separat mit einem RC-Oszillator erzeugt, der aufgrund von Bauteiletoleranzen jeweils nicht synchron zu den anderen läuft. Daher ist die Wahrscheinlichkeit von gleich langen Wartezeiten, auch bei gleicher Zufallszahl für den Zählerstand, äußerst gering.

Nach der Bestimmung der Controllernummern wird in alle Speichercontroller ein sogenannter Ankersektor geschrieben, der dann die Angaben über die Speichergröße entsprechend der Gesamtanzahl der logischen Sektornummern, die Anzahl der Controller und der Pagegröße enthält. Damit besitzt der Speichercontroller alle notwendigen Informationen, um an der Kommunikation über den Bus teilzunehmen.

Die Ausgestaltung der Erfindung ist in den Figuren beispielhaft beschrieben.
Fig. 1 zeigt ein Blockschaltbild des Speichersystems
Fig. 2 zeigt das ergänzte Blockschaltbild bei Integration der Speichercontroller auf einem Halbleitersubstrat.
Fig. 3 zeigt ein Blockschaltbild für den Bestimmungsprozess der Speichercontrollernummern
Fig. 4 zeigt ein Ablaufdiagramm für das Bestimmungsverfahren der Speichercontrollernummern

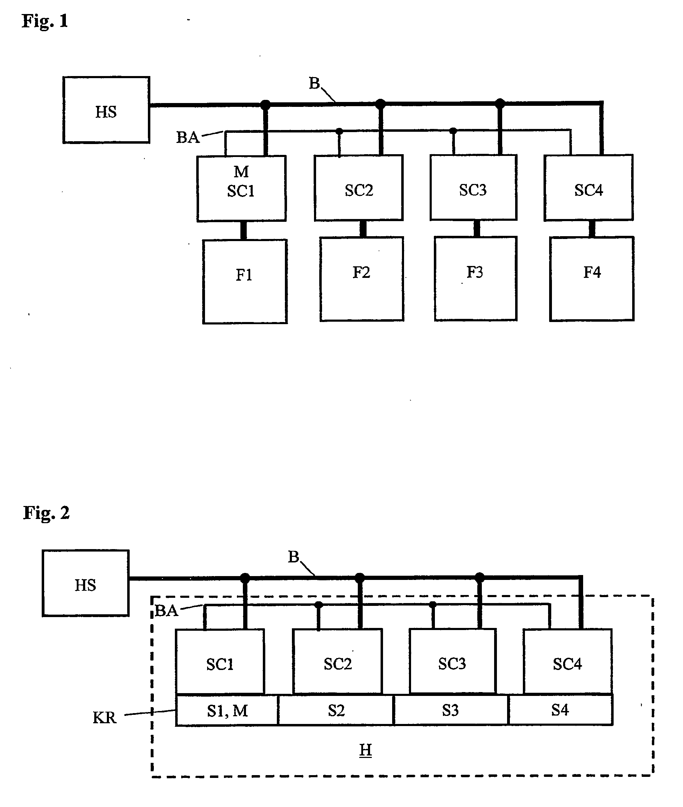

In Fig. 1 kommuniziert das Hostsystem HS über den Bus B mit den Speichercontrollern SCx. Das x steht für die fortlaufenden Ziffern 1 bis 4. Die Speichercontroller SCx sind parallel am Bus B angeschlossen. Jeder Speichercontroller SCx steuert Speicherchips Fx, die vorzugsweise in Flashtechnologie aufgebaut sind. Zusätzlich zum Bus B sind die Speichercontroller SCx auch mit der Arbitrierungsleitung BA verbunden, die den jeweiligen Zustand "belegt" oder "freigegeben" angibt. Diese Leitung BA ist als Tri-State-Leitung mit Pull-Up-Widerstand ausgeführt. Der erste Speichercontroller S C 1 ist gleichzeitig als Master M bestimmt.

Fig. 2 zeigt das gleiche Blockschaltbild wie Fig. 1 ohne die Speicherchips Fx. Hier sind die Speichercontroller SCx auf dem Halbleitersubstrat H integriert. Zusätzlich ist auf dem Halbleitersubstrat H das Kontrollregister KR untergebracht, welches für jeden Speichercontroller SCx ein Feld enthält, das die Controllernummer Sx und die Bestimmung des Masters M enthält. Diese Werte werden bei der Initialisierung des Speichersystems in das Kontrollregister KR geschrieben.

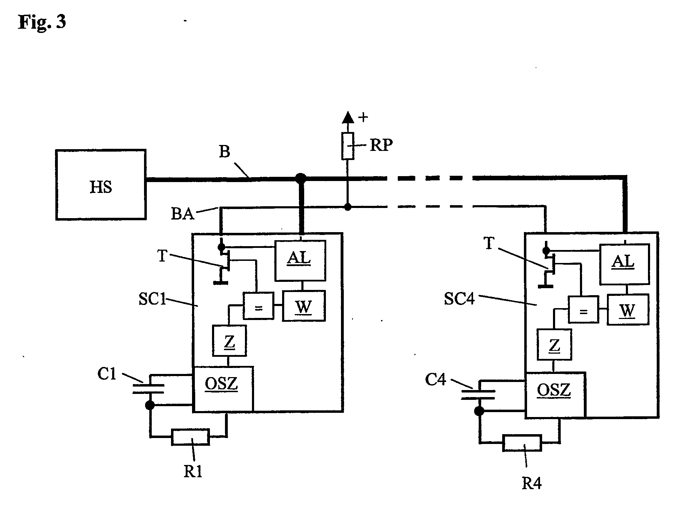

In Fig. 3 sind die Komponenten für den Bestimmungsprozess der Speichercontrollernummern in einem Blockschaltbild dargestellt. Die Auswertelogik AL in den jeweiligen Speichercontrollern SCx überwacht die Kommandos vom Hostsystem HS, die über den Bus B übertragen werden. Durch den Pull-Up-Widerstand RP ist der Ruhezustand der Leitung BA gleich "1".
Jeder Speichercontroller SCx besitzt einen Taktoszillator OSZ, dessen Frequenz von dem Kondensator Cx und dem Widerstand Rx bestimmt ist. Der hier erzeugte Takt wird solange im Zähler Z hochgezählt, bis der Zählerstand den Wert W erreicht, der von der Auswertelogik AL vorgegeben ist. Sobald dieser Wert erreicht ist, wird der Transistor T durchgeschaltet und die Arbitrierungsleitung BA auf "0" gezogen.

Auch die Auswertelogik AL ist an die Arbitrierungsleitung BA angeschlossen und überwacht diese daraufhin, ob ein anderer Speichercontroller SCx den Bus vorher auf "0" getrieben hat.

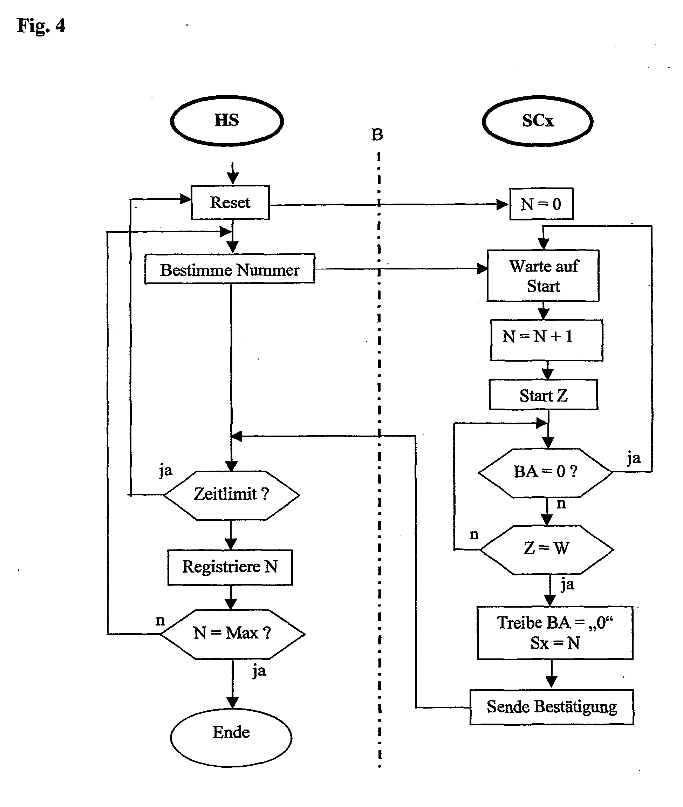

In Fig. 4 ist der Ablauf der Bestimmung der Controllernummern Sx dargestellt. Zunächst sendet das Hostsystem ein Reset-Kommando, das bei den angeschlossenen Controllern SCx den Wiederholungszähler N auf 0 setzt. Danach sendet das Hostsystem das Bestimmungskommando an die Speichercontroller SCx. Diese haben auf das Kommando gewartet und erhöhen den Wiederholungszähler um 1. Sie starten den Zähler Z. Während auf das Erreichen des Zählerstandes auf den Zufallswert W gewartet wird, überwacht der Controller die Arbitrierungsleitung BA. Falls die Leitung BA den Zustand "0" annimmt, hat ein anderer Speichercontroller SCx seine Controllernummer Sx bestimmt und dieser Controller geht wieder in die Wartestellung. Falls der Zählerstand Z den Wert W erricht, treibt dieser Controller die Arbitrierungsleitung für eine vorbestimmte Zeit auf "0" und zeigt damit an, dass er seine Controllernummer Sx bestimmt hat. Die Controllernummer Sx entspricht dem wert des Wiederholungszählers N. Dem Hostsystem HS wird eine Bestätigung der Übernahme der Controllernummer Sx gesendet.
Das Hostsystem HS überwacht den Bus B auf eine Sendebestätigung. Wird innerhalb eines vorgegeben Zeitlimits keine Bestätigung erhalten, beginnt das Hostsystem den Bestimmungsprozess von vorn. Wird die Bestätigung innerhalb der vorgegebenen Zeit erhalten, registriert das Hostsystem diesen Vorgang.
Wenn der Wiederholungszähler N den Maximalwert MAX erreicht hat, welcher der Anzahl der vorgegebenen Speichercontroller entspricht, ist der Bestimmungsprozess beendet. Anderenfalls werden weitere Bestimmungskommandos gesendet.

### Bezugszeichenliste

- AL: Auswertelogik
- B: Bus
- BA: Arbitrierungsleitung für den Bus
- Cx: Kondensator am Oszillator x
- Fx: Speicherchips
- H: Halbleitersubstrat
- HS: Hostsystem
- KR: Kontrollregister
- M: Master
- Max: Maximale Zahl der Speichercontroller
- N: Wiederholungszahl des Bestimmekommandos
- OSZ: Oszillator
- RP: Pull-Up-Widerstand
- Rx: Widerstand am Oszillator x
- Sx: Controllernummern
- SCx: Speichercontroller
- T: Transistor
- W: Zufallswert
- x: 1 .. 4, fortlaufende Nummer
- Z: Zähler
- =: Vergleicher

## Patentansprüche

1. Speichersystem, welches mit mehreren, an einem getakteten Bus (B) parallel angeordneten Speichercontrollern (SCx) und jeweils den Speichercontrollern (SCx) zugeordneten Speicherchips (Fx) gebildet ist und über den Bus (B) mit einem Hostsystem (HS) mit Speicheroperationskommandos unter Verwendung von logischen Speichersektornummern kommuniziert, wobei bei einer vom Hostsystem (HS) angeforderten Speicheroperation der jeweils für einen Bereich von logischen Speichersektornummern betroffene Speichercontroller (SCx) den Bus für die Kommunikation mit dem Hostsystem (HS) mittels einer Arbitrierung über eine einzige Arbitrierungsleitung (BA) übernimmt, **dadurch gekennzeichnet, dass** die Arbitrierungsleitung ausschließlich zwischen den Speichercontrollern (SCx) geschaltet ist.

2. Speichersystem nach Anspruch 1, **dadurch gekennzeichnet, dass** einer der parallelen Speichercontroller (SCx) als Master (M) am Bus (B) bestimmt ist, und dieser, solange keiner der anderen Speichercontroller (SCx) den Bus (B) übernommen hat, die Kommunikation mit dem Hostsystem (HS) durchführt.

3. Speichersystem nach Anspruch 1, **dadurch gekennzeichnet, dass** die Arbitrierung des Busses (B) anhand der angesprochenen Speichersektomummer und über eine einzige Tri-State-Arbitrierungsleitung (BA) erfolgt, welche die Belegung des Busses (B) durch den betroffenen Speichercontroller (SCx) während der Kommunikationszeit mit einem Belegt-Signal angibt.

4. Speichersystem nach Anspruch 3, **dadurch gekennzeichnet, dass** bei der Freigabe des Busses (B) durch einen Speichercontroller (SCx) auf der Arbitrierungsleitung (BA) eine Schutzzeit eingefügt ist, in der die Arbitrierungsleitung (BA) aktiv auf Freigabe getrieben ist.

5. Speichersystem nach Anspruch 4, **dadurch gekennzeichnet, dass** die Schutzzeit einer Taktlänge des Busses (B) entspricht.

6. Speichersystem nach Anspruch 1, **dadurch gekennzeichnet, dass** für aufeinanderfolgende logische Speichersektornummern unterschiedliche Speichercontroller (SCx) zugeordnet sind.

7. Speichersystem nach Anspruch 1, **dadurch gekennzeichnet, dass** die Speicherchips (Fx) blockweise löschbare Flashspeicher sind.

8. Speichersystem nach einem der vorstehenden Ansprüche, **dadurch gekennzeichnet, dass** die Speichercontroller (SCx) gemeinsam auf einem Halbleitersubstrat (H) angeordnet sind.

9. Speichersystem nach Anspruch 8, **dadurch gekennzeichnet, dass** die Bestimmung die Reihenfolge der Speichercontroller (SCx) am Bus (B) und des Masters (M) durch eine Programmierung eines Kontrollregisters (KR) zu den jeweiligen Speichercontrollern (SCx) erfolgt.

10. Verfahren zur Bestimmung der Reihenfolge der Speichercontroller (SCx) am Bus (B), **dadurch gekennzeichnet, dass**
• auf ein wiederholtes Bestimmungskommando des Hostsystems (HS) jeweils ein Speichercontroller (SCx) nach einer zufällig bestimmtem Zeit eine Arbitrierungsleitung (BA) für einen definierten Zeitraum belegt, sofern kein anderer Controller (SCx) die Leitung (BA) vorher belegt hat,
• aus der Wiederholungszahl dieses Bestimmungskommandos dieser Controller seine Controllernummer (Sx) ableitet,
• jeweils ein Bestätigungssignal zum Hostsystem (HS) gemeldet wird,
• sich der jeweilige Speichercontroller (SCx) nach der Bestätigung aus dem Bestimmungsverfahren zurückzieht.

11. Verfahren nach Anspruch 10, **dadurch gekennzeichnet, dass** der Speichercontroller (SCx) mit der Controllernummer 1 als Master (M) bestimmt ist.

12. Verfahren nach Anspruch 10, **dadurch gekennzeichnet, dass** das Hostsystem (HS) die Bestimmungsvorgang wiederholt, falls nicht genügend Bestätigungen der Bestimmung gemeldet werden.

13. Verfahren nach Anspruch 10, **dadurch gekennzeichnet, dass** die zufällige Zeit zur Belegung der Arbitrierungsleitung (BA) von einem Zähler abgeleitet ist, der von Bauteiletoleranzen abhängig ist.

## Claims

1. A memory system that is configured with a plurality of memory controllers (SCx) disposed in parallel on a clocked bus (B) and memory chips (Fx) associated with the respective memory controllers (SCx), and that communicates via the bus (B) with a host system (HS) by means of operational memory commands using logical memory sector numbers, wherein, in the case of a memory operation requested by the host system (HS), the memory controller (SCx) affected with respect to a range of logical memory sector numbers takes over the bus for the communication with the host system (HS) over a single arbitration line, **characterized in that** the arbitration line is connected exclusively between the memory controllers (SCx).

2. A memory system according to claim 1, **characterized in that** one of the parallel memory controllers (SCx) is designated as the master (M) on the bus (B) and that it performs the communication with the host system (HS) as long as none of the other memory controllers (SCx) has taken over the bus (B).

3. A memory system according to claim 1, **characterized in that** the arbitration of the bus (B) between the memory controllers (SCx) takes place based on the addressed memory sector number and over a single tri-state line (BA) that indicates the reservation of the bus (B) by the affected memory controller (SCx) during the communication period with a "reserved" signal.

4. A memory system according to claim 3, **characterized in that** when the bus (B) is released by a memory controller (SCx), a shield time is inserted on the arbitration line (BA), during which the line (BA) is actively driven to "released".

5. A memory system according to claim 4, **characterized in that** the shield time corresponds,to the length of one clock cycle of the bus (B).

6. A memory system according to claim 1, **characterized in that** for consecutive logical memory sector numbers different memory controllers (SCx) are assigned.

7. A memory system according to claim 1, **characterized in that** the memory chips (Fx) are flash memories that are erasable in blocks.

8. A memory system according to claim 1, **characterized in that** the memory controllers (SCx) are jointly disposed on a semiconductor substrate (H).

9. A memory system according to claim 8, **characterized in that** the designation of the sequence of the memory controllers (SCx) on the bus (B) and of the master (M) takes place by means of programming a control register (KR) to the respective memory controllers (SCx).

10. A method for determining the sequence of the memory controllers (SCx) on the bus (B), **characterized in that**
• after a repeated designation command by the host system (HS), a memory controller (SCx) occupies, after a randomly determined amount of time, an arbitration line (BA) in each case for a specified length of time, provided that no other controller (SCx) has previously reserved the line (BA),
• from the number of repetitions of this designation command the controller derives its controller number (Sx),
• a confirmation signal is reported to the host system (HS) in each case,
• the respective memory controller (SCx) withdraws from the designation process after the confirmation.

11. A method according to claim 10, **characterized in that** the memory controller (SCx) with the controller number 1 is designated as the master (M).

12. A method according to claim 10, **characterized in that** the host system (HS) repeats the designation process if insufficient designation confirmations are reported.

13. A method according to claim 10, **characterized in that** the random time for occupying the arbitration line (BA) is derived from a counter that is subject to component tolerances.

## Revendications

1. Système dé mémoire comportant plusieurs contrôleurs mémoire (SCx) disposés parallèlement sur un bus à horloge (B) et des puces mémoire (Fx) liés aux contrôleurs mémoire (SCx) respectifs, qui communique par l'intermédiaire d'un bus (B) avec un système hôte (HS), au moyen des commandes d'opération de mémoire en utilisant des numéros de secteur de mémoire logiques, de sorte que dans le cas d'une opération de mémoire demandée par le système hôte (HS), le contrôleur mémoire (SCx) respectif, affecté respectivement à une gamme de numéros de secteur de mémoire logiques, prend la relève du bus pour la communication avec le système hôte (HS) au moyen d'un arbitrage par une seule ligne d'arbitrage, **caractérisé en ce que** la ligne d'arbitrage est connectée exclusivement entre les contrôleurs mémoire (SCx).

2. Système de mémoire selon la revendication 1, **caractérisé en ce que** l'un d'entre les contrôleurs mémoire parallèles (SCx) est déterminé comme maître (M) sur le bus (B) et que celui-ci exécute la communication avec le système hôte (HS) tant que aucun des autres contrôleurs mémoire (SCx) n'a pris la relève du bus (B).

3. Système de mémoire selon la revendication 1, **caractérisé en ce que** l'arbitrage du bus (B) entre les contrôleurs mémoire (SCx) a lieu, basé sur le numéro de secteur de mémoire, via une seule ligne de trois états (BA) qui indique l'occupation du bus (B) par le contrôleur de mémoire (SCx) respectif, pendant le temps de communication, avec le signal « occupé ».

4. Système de mémoire selon la revendication 3, **caractérisé en ce que**, pendant la libération du bus (B) par un contrôleur mémoire (SCx), un temps de protection est inséré sur la ligne d'arbitrage (BA), pendant lequel la ligne (BA) est activement entraîné en mode « libre ».

5. Système de mémoire selon la revendication 4, **caractérisé en ce que** le temps de protection correspond à la durée d'un temps de cycle du bus (B).

6. Système de mémoire selon la revendication 1, **caractérisé en ce que** les numéros logiques de secteur de mémoire consécutifs sont assignés à des contrôleurs mémoire (SCx) différents.

7. Système de mémoire selon la revendication 1, **caractérisé en ce que** les puces mémoire (Fx) sont des mémoires flash qui sont effaçables par blocs.

8. Système de mémoire selon la revendication 1, **caractérisé en ce que** les contrôleurs mémoire (SCx) sont conjointement disposés sur un même substrat semi-conducteur (H).

9. Système de mémoire selon la revendication 8, **caractérisé en ce que** la désignation de l'ordre des contrôleurs mémoire (SCx) sur le bus (B) et la désignation du maître (M) est effectué au moyen d'une programmation d'un registre de contrôle (KR) correspondant aux contrôleurs de mémoire (SCx) respectifs.

10. Procédé pour déterminer l'ordre des contrôleurs mémoire (SCx) sur le bus (B), **caractérisé en ce que**
• après une commande de désignation répétée par le système hôte (HS), un contrôleur mémoire (SCx) occupe, après un temps alloué aléatoire, la ligne d'arbitrage (BA) pour une durée déterminée, à la condition que aucun autre contrôleur (SCx) n'ait précédemment occupé la ligne (BA),
• le contrôleur détermine son numéro de contrôleur (Sx) du nombre de répétitions de cette commande de désignation,
• un signal de confirmation est rapporté au système hôte (HS) dans chaque cas,
• le contrôleur de mémoire (SCx) respectif se retire du processus de désignation après confirmation.

11. Procédé selon la revendication 10, **caractérisé en ce que** le contrôleur mémoire (SCx) avec le numéro de contrôleur « 1 » est désigné comme maître (M).

12. Procédé selon la revendication 10, **caractérisé en ce que** le système hôte (HS) répète le processus de désignation si des confirmations de désignation rapportées sont insuffisantes.

13. Procédé selon la revendication 10, **caractérisé en ce que** le temps aléatoire pour occuper la ligne d'arbitrage (BA) est dérivée d'un compteur qui est soumis à la tolérance des composants.
